(19) Europäisches Patentamt / European Patent Office / Office européen des brevets

(11) **EP 4 517 662 A1**

(12) **EUROPEAN PATENT APPLICATION**

(43) Date of publication:
**05.03.2025 Bulletin 2025/10**

(21) Application number: **23193726.9**

(22) Date of filing: **28.08.2023**

(51) International Patent Classification (IPC):
**G06T 7/521** (2017.01)

(52) Cooperative Patent Classification (CPC):
**G06T 7/521;** G06T 2207/10004; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• Piechocki, Piotr
 61-312 Poznan (PL)
• Wozniak, Pawel
 62-110 Damaslawek (PL)

• Wozniak, Wieslaw
 62-110 Damaslawek (PL)

(72) Inventors:
• Wozniak, Pawel
 62-110 Damaslawek (PL)
• Giza, Piotr
 62-510 Konin (PL)

(74) Representative: **Wroblewski, Marcin Jan Fert, Jakubiak vel Wojtczak Wróblewski rzecznicy patentowi Sp. P. / ul. Gdanska 126/A103 90-520 Lodz (PL)**

(54) **A METHOD FOR DYNAMIC 3D SCANNING OF A SPATIAL OBJECT AND A DYNAMIC 3D SCANNER**

(57) A method for dynamic 3D scanning of a spatial object comprising the following steps: projecting (101) a stripe pattern (4) onto a spatial object (5) by a projector (2) of a dynamic 3D scanner (1), wherein the stripe pattern (4) is a variable-frequency pattern formed with the usage of a periodic function, and the stripe pattern (4) is arranged such that the width/height of its stripes corresponds to an oscillation period $s_i$ of eight pixels or its multiples, where a maximum value of the oscillation period $s_i$ is limited to a maximum value of the resolution of the projector (2), wherein $i = (0,1, ...,n)$; the stripes form a sequence S of said oscillation periods $s_i$, wherein at most three of consecutive oscillation periods $s_i$ may have the same value, wherein $i = (0,1, ..., n)$; the sum of the oscillation periods $s_i$ forming the sequence S must be equal to or greater than the maximum value of the resolution of the projector (2), wherein $i = (0,1, ...,n)$; and the method comprises further the steps of capturing (102) by a camera (3) of the dynamic 3D scanner (1) a frame of the spatial object (5) with the stripe pattern (4) onto its surface, generating (103) a map of the probability of qualifying pixels for a reconstruction of a 3D image of the spatial object (5) from the captured frame, thresholding (104) the map of the probability of qualifying pixels for a reconstruction of a 3D image of the spatial object (5) to obtain (105) a shadow mask comprising pixels excluded from the reconstruction of a 3D image of the spatial object (5), correlating (106) the captured frame with the shadow mask to obtain (107) a frame comprising the spatial object (5) with the stripe pattern (4) onto its surface with blanked out pixels excluded from the reconstruction of a 3D image of the spatial object (5), generating (109) a map of the imaginary component of a signal with a variable frequency and a map of the real component of a signal with a variable frequency from the frame comprising the spatial object (5) with the stripe pattern (4) onto its surface with blanked out pixels excluded from said reconstruction, generating (110) a wrapped phase map with a variable frequency from the map of the imaginary component of a signal with a variable frequency and the map of the real component of a signal with a variable frequency, generating (116) a pixel map with data comprising assigned oscillation period numbers and a map of probability values of assigning oscillation period numbers from the wrapped phase map with a variable frequency, filtering out (117) from the pixel map with data comprising assigned oscillation period number areas having on the map of probability values of assigning the oscillation period numbers a value $\leq 0.99$, reconstructing (118) the filtered out areas from the pixel map, generating (119) an unwrapped phase map with a variable frequency from the wrapped phase map with a variable frequency and the pixel map with reconstructed (118) filtered out areas, transforming (120) the unwrapped phase map with a variable frequency into an unwrapped phase map with a constant frequency so as to obtain a uniform oscillation period over the entire frequency domain of the unwrapped phase map, reconstructing (121) a 3D image of the spatial object based on the unwrapped phase map with a constant frequency.

EP 4 517 662 A1

**Fig. 2**

**Description**

*Technical field*

The present invention relates to a method for dynamic 3D scanning of a spatial object and a dynamic 3D scanner.

*Background of the invention*

From Chinese patent CN111383234B there is known an online dense 3D reconstruction method based on machine learning that uses structured light. Said method comprises the steps of calibrating parameters of camera-projector system; acquiring an image using a projector to project coded structured light onto a surface of an object to be measured and using a camera to collect a structured light image modulated by the surface of the object; removing noise in the collected image to improve image quality; recognizing color using a neural network model; filtrating images based on recognition of light bar parameters; detecting a light bar center line and determining a corresponding index of the light bar center line in a light bar sequence; structured light decoding according to the brightness of each pixel point and the light bar index to obtain a phase corresponding to the images acquired by the camera and acquiring a set of corresponding points; based on a trigonometric intersection algorithm in photogrammetry, intersecting each group of matching point pairs in the set of corresponding point, and decomposing spatial three-dimensional coordinates of the matching point pairs, and then completing dense three-dimensional reconstruction of surfaces of the object. The object of the invention is to improve calculation efficiency and stability of said method comparing to the known solution.

From international PCT application WO2020102814A1 there are known a method for processing interferograms or deformed fringes and a device for performing optical system design. The method comprising obtaining an input phase image based on the interferograms or the deformed fringes, wherein each pixel of the input phase image is associated with a phase value and the deformed fringes are obtained by projecting a set of pre-deformed fringes on an object; segmenting the input phase image by classifying the input phase image into multiple regions based on the phase value and a location of each pixel; assigning an integer value to each of the multiple regions, wherein the integer value indicates that a corresponding region has a phase offset equal to a product of 2p and the integer value; and constructing an output phase image based on the phase value of each pixel and the phase offset of each of the multiple regions. The multiple regions and the integer value corresponding to each of the multiple regions are determined by a convolutional neural network. Furthermore, the input phase image is denoised by using a neural network that is trained using only noisy data. In turn, the device configured to perform the steps of said method.

Further, from international PCT application WO2020063013A1 there are known a fringe projection time phase unwrapping method based on deep learning. The method comprises the steps of projecting by a projector four sets of three-step phase-shifted patterns on a measured object, wherein frequencies of the four sets of the patterns are 1, 8, 32, and 64; acquiring a raster image to obtain a wrapped phase maps and calculating the wrapped phase maps of different frequencies; performing phase unwrapping on the wrapped phase maps to obtain a periodic level diagram and an absolute phase diagram of a phase with the frequency of 64; building a residual convolutional neural network, wherein the input data are the wrapped phase maps with the frequencies of 1 and 64 and the output data is the periodic level diagram of the phase with the frequency of 64; and finally a training set and a verification set are made to train and verify said network, wherein said network verifies the test set to output the periodic level diagram of the phase with the frequency of 64. As a result, the method is adopted and the wrapped phase maps with the frequency of 1 are used for unwrapping the wrapped phase maps with the frequency of 64. The purpose of the aforementioned solution is to provide a method for time-phase extension of fringe projection based on deep learning, while providing a highly accurate three-dimensional measurement without increasing the number of projection patterns.

Chinese patent application CN111523618A discloses a phase unwrapping method based on deep learning comprising the steps of providing fringe-encoded images by a projector; collecting the fringe-encoded images by a camera; obtaining a wrapped phase information of the fringe-encoded images by means of three-step phase algorithm, and adding Gaussian noise and random noise to it to generate a training data set; generating the training data set and building a fully connected neural network, wherein each layer of the fully connected neural network uses only one node such that the number of nodes is increased layer by layer and at the end of the network, the number of network nodes is decreased layer by layer; inputting corresponding pixel values into two wrapped phase images one by one to obtain a fringe level of the entire image, and then obtaining the absolute phase, wherein the absolute phase is described by the equation:

$$\Phi(x,y) = \phi(x,y) + 2\pi k(x,y)$$

wherein

$\Phi(x,y)$ is the absolute phase,

$\phi(x,y)$ is the wrapped phase

$k(x,y)$ is the fringe order.

From the article by Pengcheng Yao, Shaoyan Gai, Yuchong Chen, Wenlong Chen, Feipeng Da, "A multi-code 3D measurement technique based on deep learning", "Optics and Lasers in Engineering", Volume: 143, August 2021, 106623, there is known a multi-code deep learning method designed to obtain the high-slope absolute phase with high accuracy and robustness with usage of two patterns. Said method uses for this purpose two neural sub-networks. A convolutional neural network with adaptive linear (ALCNN) to obtain a wrapped phase from single cosine pattern and a multi-connected convolutional neural network (MCCNN) to obtain a fringe order from a multi-code pattern, wherein the fringe order is required to recover the absolute phase by unwrapping $2\pi$ discontinuities. The multi-code pattern is expressed as follows:

$$M_c(x, y) = a(x, y) + b(x, y) \cos\left(1 - \frac{2xC_s(x,y)}{6} + \frac{1}{6}\right)$$

where:
$C_s(x,y)$ is a coding scheme of the multi-code pattern.

The MCCNN network has functions of segmentation and recognition. The segmentation function is used to split codes located in different periods and extract coding scheme from the multi-code pattern. Then the fringe order is recognized from the coding scheme by the help of the recognition function and the feature of 3-connected-codes.

The solutions known from the state of the art use constant-frequency sinusoidal patterns. The disadvantage of such solutions in dynamic 3D scanning is that a single sinusoidal frame does not comprise enough information to allow a reconstruction of a scanned spatial object, thus forcing the need to use a coding frame. A 3D image reconstruction from two consecutive frames is prone to errors when scanned objects move quickly. Moreover, in said solutions occur delays in acquisition of image sequences due to the way a camera and a projector, synchronized in a dynamic 3D scanner, work together. Therefore, there is a need to provide a method for dynamic 3D scanning of a spatial object that would eliminate the need use a coding frame.

### The Essence of the invention

The object of the invention is a method for dynamic 3D scanning of a spatial object comprising the following steps:

- projecting a stripe pattern onto a spatial object by a projector of a dynamic 3D scanner,
  wherein
  the stripe pattern is a variable-frequency pattern formed with the usage of a periodic function, and the stripe pattern is arranged such that

  - the width/height of its stripes corresponds to an oscillation period $s_i$ of eight pixels or its multiples, where a maximum value of the oscillation period $s_i$ is limited to a maximum value of the resolution of the projector, wherein $i = (0,1, ..., n)$;

  - the stripes form a sequence S of said oscillation periods $s_i$, wherein at most three of consecutive oscillation periods $s_i$ may have the same value, wherein $i = (0,1, ..., n)$;

  - the sum of the oscillation periods $s_i$ forming the sequence S must be equal to or greater than the maximum value of the resolution of the projector, wherein $i = (0,1, ..., n)$;

- capturing by a camera of the dynamic 3D scanner a frame of the spatial object with the stripe pattern projected onto its surface,

- generating a map of the probability of qualifying pixels for a reconstruction of a 3D image of the spatial object from the captured frame,

- thresholding the map of the probability of qualifying pixels for a reconstruction of a 3D image of the spatial object to obtain a shadow mask comprising pixels excluded from the reconstruction of a 3D image of the spatial object,

- correlating the captured frame with the shadow mask to obtain a frame comprising the spatial object with the stripe pattern onto its surface with blanked out pixels excluded from the reconstruction of a 3D image of the spatial object,

- generating a map of the imaginary component of a signal with a variable frequency and a map of the real component of a signal with a variable frequency from the frame comprising the spatial object with the stripe pattern onto its surface with blanked out pixels excluded from said reconstruction,

- generating a wrapped phase map with a variable frequency from the map of the imaginary component of a signal with a variable frequency and the map of the real component of a signal with a variable frequency,

- generating a pixel map with data comprising assigned oscillation period numbers and a map of probability values of assigning oscillation period numbers from the wrapped phase map with a variable frequency,

- filtering out from the pixel map with data comprising assigned oscillation period number areas having on the map of probability values of assigning the oscillation period numbers a value $\leq 0.99$,

- reconstructing the filtered out areas from the pixel map,

- generating an unwrapped phase map with a variable frequency from the wrapped phase map with a variable frequency and the pixel map with reconstructed filtered out areas,

- transforming the unwrapped phase map with a variable frequency into an unwrapped phase map with a constant frequency so as to obtain a uniform oscillation period over the entire frequency domain of the unwrapped phase map,

- reconstructing a 3D image of the spatial object based on the unwrapped phase map with a constant frequency.

The application of the disclosed stripe pattern allows to eliminate the need to use a coding frame during dynamic 3D scanning of a spatial object. This is due to the fact that the disclosed stripe pattern allows to comprise all the information needed to a reconstruction of scanned spatial object in a single frame. As a result a 3D image reconstruction is more resistant to errors when a scanned object moves quickly. Furthermore, the application of the disclosed stripe pattern eliminates the problem of delays occurring in acquisition of image sequences due to the way a camera and a projector, synchronized in a dynamic 3D scanner, work together.

Preferably, the stripe pattern is generated with enhancement of overall stripe pattern brightness by increasing a periodic function constant component $I_{DC}$ of a stripe pattern pixel brightness level $I(x)$ while decreasing a periodic function variable component $I_{AC}$ of said level, wherein

$$I(x) = I_{DC} + I_{AC} * pw(\varphi(x))$$

where:

$I(x)$ - a stripe pattern pixel brightness level for a pixel coordinate value $x$ in an 8-bit scale $\langle 0, 255 \rangle$,

$I_{DC}$ - a periodic function constant component,

$I_{AC}$ - a periodic function variable component,

$x$ - a pixel coordinate value of the stripe pattern (4),

$\varphi(x)$ - a function transforming a pixel coordinate value $x$ of the stripe pattern to an angular value $\varphi$,

$pw(\varphi(x))$ - a periodic function used to form the stripe patten.

The generation of the stripe pattern with enhancement of overall stripe pattern brightness by increasing the periodic function constant component $I_{DC}$ of the stripe patten pixel brightness level $I(x)$ while decreasing the periodic function variable component $I_{AC}$ of said level results in increased illumination of the captured frame what allows to include in said captured frame more information about a degree of shading and texture of the spatial object. As a consequence increasing the periodic function constant component $I_{DC}$ of the stripe pattern pixel brightness level $I(x)$ while decreasing the periodic function variable component $I_{AC}$ of said level facilitates distinguishing areas from the pixel map that are subject to reconstruction and those excluded from said reconstruction.

Preferably, the transformation of the unwrapped phase map with a variable frequency into the unwrapped phase map with a constant frequency is done with the usage of the formula:

$$\phi_{const} = w(\phi_{var}) \cdot f(i) + \big(i + m(i)\big) \cdot 2\pi$$

where:

$$i = \left\lfloor \frac{\phi_{var}}{2\pi} \right\rfloor$$

$$w(\phi_{var}) = \phi_{var} - 2\pi \cdot i$$

and

$$f(i) = \frac{s_i}{8}$$

$$m(i) = \sum_{k=0}^{i-1} (f(k) - 1)$$

where:

$\Phi_{var}$ - an absolute phase value associated with the unwrapped phase map with a variable frequency,
$\Phi_{const}$ - an absolute phase value associated with the unwrapped phase map with a constant frequency,
$w(\Phi_{var})$ - an auxiliary function that allows to extract from the absolute phase value associated with the unwrapped phase map with a variable frequency the relative phase value in a range $\langle 0,2\pi \rangle$,
$i$ - a number of an oscillation period $s_i$, wherein the number corresponds to an absolute phase value associated with the unwrapped phase map with a variable frequency $\Phi_{var}$,
$s_i$ - a value of an oscillation period of the sequence S formed by the stripes of the stripe pattern, wherein $i = (0,1, ..., n)$;
$f(i)$ - a relative phase value multiplier for period number $i$,
$m(i)$ - an oscillation period number modifier for period number $i$,
$f(k)$ - a relative phase value multiplier for period number $k$.

Preferably, when reconstructing of the 3D image of the spatial object a projector coordinate value $x(\Phi_{const})$ of each reconstructed pixel of the frame captured by the camera is determined from the unwrapped phase map with a constant frequency according to formula

$$x(\phi_{const}) = \frac{p\phi_{const}}{2\pi}$$

where:

$$\phi \epsilon \langle 0, \infty \rangle$$

$\Phi_{const}$ - an absolute phase value associated with the unwrapped phase map with a constant frequency,

$p$ - an oscillation period of the unwrapped phase map with a constant frequency expressed in pixels,

in order to obtain a map of pixel coordinates,

wherein the 3D coordinates of the spatial object are determined by converting the unwrapped phase map with a constant frequency into the map of projector pixel coordinates and taking into consideration relative location of the camera and the projector.

Preferably, after the step of obtaining the frame comprising the spatial object with the stripe pattern onto its surface with blanked out pixels excluded from the reconstruction of a 3D image of the spatial object and before the step of generating the map of the imaginary component of a signal with a variable frequency and the map of the real component of a signal with a variable frequency from the frame comprising the spatial object with the stripe pattern onto its surface with blanked out pixels excluded from said reconstruction, said frame is divided into square fragments, and the generation of the map of the imaginary component of a signal with a variable frequency and the map of the real component of a signal with a variable frequency is performed by generating for each of said square fragments of said frame square fragments of a map of the imaginary component of a signal with a variable frequency and square fragments of a map of the real component of a signal with a variable frequency, cutting out overlapping edges of the square fragments of the map of the imaginary component of a signal with a variable frequency and the square fragments of the map of the real component of a signal with a variable frequency, assembling of the square fragments of the map of the imaginary component of a signal with a variable frequency and the square fragments of the map of the real component of a signal with a variable frequency into, respectively, the map of the imaginary component of a signal with a variable frequency and the map of the real component of a signal with a variable frequency.

The application of the steps of division of the frame comprising the spatial object with the stripe pattern onto its surface with blanked out pixels excluded from the reconstruction of a 3D image of the spatial object into square fragments, the generation of the map of the imaginary component of a signal with a variable frequency and the map of the real component of a signal with a variable frequency performed by generating for each of said square fragments of said frame square fragments of a map of the imaginary component of a signal with a variable frequency and square fragments of a map of the real component of a signal with a variable frequency, cutting out overlapping edges of the square fragments of the map of the imaginary component of a signal with a variable frequency and the square fragments of the map of the real component of a signal with a variable frequency, assembling of the square fragments of the map of the imaginary component of a signal with a variable frequency and the square fragments of the map of the real component of a signal with a variable frequency into, respectively, the map of the imaginary component of a signal with a variable frequency and the map of the real component of a signal with a variable frequency allows to obtain a higher maximum resulting resolution with the usage of the same computing memory resource as in the solutions known from the prior art.

Preferably, after the step of generating the wrapped phase map with a variable frequency from the map of the imaginary component of a signal with a variable frequency and the map of the real component of a signal with a variable frequency, and before the step of generating the pixel map with data comprising assigned period numbers and the map of probability values of assigning period numbers from the wrapped phase map with a variable frequency the spatial object in the wrapped phase map is divided into longitudinal fragments, and overlapping edges of the longitudinal fragments of the pixel map with data comprising assigned period numbers are cut out, overlapping edges of the longitudinal fragments of the map of probability values of assigning period numbers are cut out, the longitudinal fragments of the pixel map with data comprising assigned period numbers with the cut out overlapping edges are assembled into the pixel map with data comprising assigned period numbers, and the longitudinal fragments of the map of probability values of assigning period numbers with the cut out overlapping edges are assembled into the map of probability values of assigning period numbers.

The application of the steps of division of the spatial object in the wrapped phase map, cutting out overlapping edges of the pixel map with data comprising assigned period numbers and cutting out overlapping edges of the map of probability values of assigning period numbers obtained in a form of the longitudinal fragments, and assembling the pixel map with data comprising assigned period numbers from the longitudinal fragments with the cut out overlapping edges as well as assembling the map of probability values of assigning period numbers from the longitudinal fragments with the cut out overlapping edges allows to obtain even higher maximum resulting resolution, even up to 10 times, with the usage of the same computing memory resource as in the solutions known from the prior art.

The application of the stripe pattern which is a variable-frequency pattern formed with the usage of the periodic function based on the arcsine function allows to reconstruct a 3D image of a spatial object with a higher level of accuracy compared to solutions known from the state of the art.

Preferably, the step of filtering out from the pixel map with data comprising assigned period number areas having on the map of probability values of assigning the period numbers is performed for a value <= 0.95.

Preferably, the step of filtering out from the pixel map with data comprising assigned period number areas having on the map of probability values of assigning the period numbers is performed for a value <= 0.90.

Preferably, the generation of the map of the probability of qualifying pixels for a reconstruction of a 3D image of the spatial object is done by a first convolutional neural network.

Preferably, the generation of the map of the imaginary component of a signal with a variable frequency and the map of the real component of a signal with a variable frequency is done by a second convolutional neural network.

Preferably, the generation of the pixel map with data comprising assigned period numbers and the map of probability values of assigning period numbers is done by a third convolutional neural network.

Preferably, the stripe pattern is a variable-frequency pattern formed with the usage of a periodic function based on the arcsine function

$$pw\big(\varphi(x)\big) = \frac{2}{\pi}\sin^{-1}\big(z(\varphi(x))\big)$$

where:

$z(\varphi(x))$ - a linear zigzag function defined in a range $\langle 0,2\pi \rangle$,

$$z\big(\varphi(x)\big) = \left|2 - \left|1 - \frac{2\cdot(\varphi(x))}{\pi}\right|\right| - 1$$

where:

$|\,.\,|$ - an absolute value operator,

$$\varphi(x) = \sum_{i=0}^{N-1} \hat{\varphi}(x,i)$$

$$\hat{\varphi}(x,i) = \begin{cases} \dfrac{(x-\hat{s}_i)\cdot 2\pi}{s_i} & for\ \hat{s}_i \le x < \hat{s}_{i+1} \\ 0 & otherwise \end{cases}$$

$$\hat{S} = \{\hat{s}_i\}$$

$$\hat{s}_i = \sum_{k=0}^{i-1} s_k$$

where:

$\hat{s}_i$ - an element of an auxiliary sequence $\hat{S}$ of accumulated oscillation periods, wherein the auxiliary sequence $\hat{S}$ determines ranges of pixel coordinate values of the stripe pattern for each oscillation period $s_i$ in the sequence S such that $s_i$ is an oscillation period value in a pixel range $\langle \hat{s}_i, \hat{s}_{i+1}\rangle$, wherein $i = (0,1, ..., n)$;

$\varphi(x,i)$ - a conditional function that allows to transform a pixel coordinate value x of the stripe pattern (4) to an angular value $\varphi$ in a range $\langle 0,2\pi\rangle$ for an oscillation period $s_i$ if the pixel coordinate value x of the stripe pattern fits in a determined range of pixel coordinate values of the oscillation period $s_i$, wherein $i = (0,1, ..., n)$.

The application of the stripe pattern which is a variable-frequency pattern formed with the usage of the periodic function based on the arcsine function allows to reconstruct a 3D image of a spatial object with a higher level of accuracy compared to solutions known from the state of the art.

The object of the invention is also a dynamic 3D scanner comprising a projector for projecting a stripe pattern onto a spatial object, a camera for capturing a frame of the spatial object with the stripe pattern on its surface, wherein the camera is pointed at non-zero angle to a display direction of the projector, the dynamic 3D scanner further comprising a processing unit, and wherein the processing unit is configured to performed the steps of the method according to the invention.

The invention also relates to a computer program comprising means of the program code for performing all steps of the method according to the invention, when said program is running on the dynamic 3D scanner according to the invention.

Furthermore, the invention relates to a computer-readable medium storing computer-implemented instructions for performing all the steps of the method according to the invention implemented on the dynamic 3D scanner according to the invention.

### *Advantages of the invention*

The method according to the invention allows a reduction of manufacturing costs of a dynamic 3D scanner and use of hardware components such as a projector and camera with standard parameters, in particular the method according to the invention allows use of home projectors operating via HDMI interface. For example, the method according to the invention ensures use of Digital Light Processing projectors.

The method according to the invention ensures shortening of time of projecting a stripe pattern onto a spatial object subject to 3D reconstruction and as a result the method ensures shortening of time of capturing of a frame comprising the spatial object with the stripe pattern on its surface as in said method only one stripe pattern is projected. Said shortening is possible even when using home projectors operating via HDMI interface.

The method according to the invention ensures improvement of scanning by using convolutional neural networks.

The method according to the invention ensures increased robustness of a dynamic 3D scanner to the noise present in the input data, and as a result reconstruction of geometry of a spatial object with a higher accuracy.

The method according to the invention allows for displaying a static pattern, thus eliminating the problem of occurring delays in acquisition of image sequences.

The method according to the invention allows 3D scanning of a spatial object being in motion.

### *Description of the drawings*

The subject of the invention is shown in the embodiments in a drawing, in which:

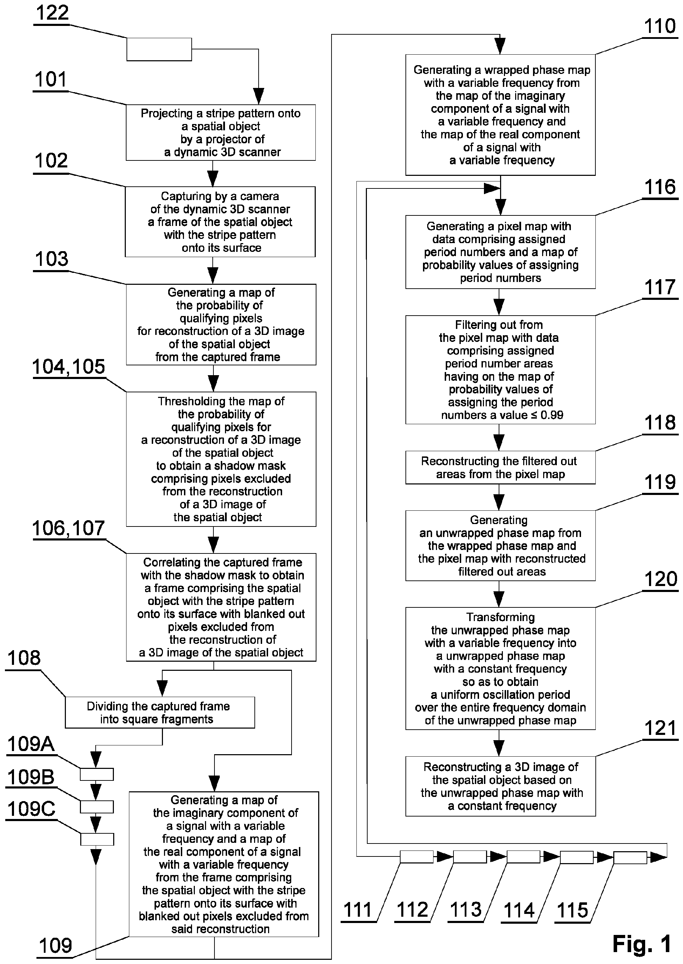

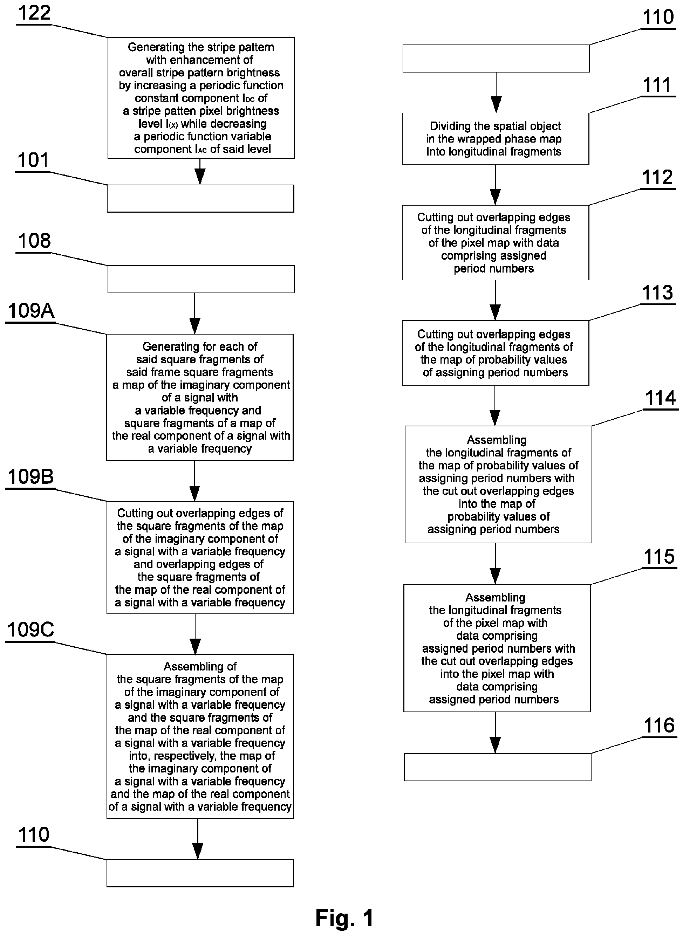

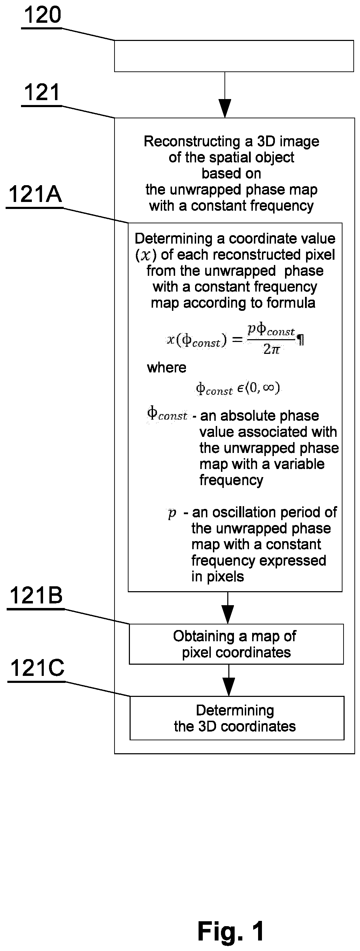

Fig. 1 presents a flowchart of a method for dynamic 3D scanning of a spatial object according to the invention,

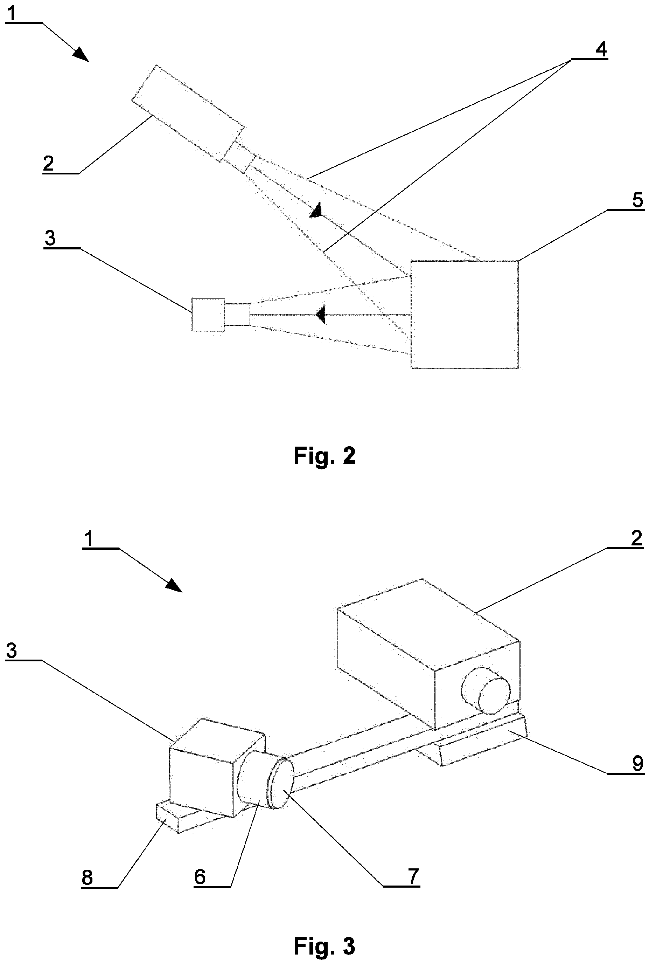

Fig. 2 presents an operational scheme of a dynamic 3D scanner according to the invention,

Fig. 3 presents schematically a dynamic 3D scanner according to the first embodiment of the invention,

Fig. 4 presents an example of a stripe pattern for use in a method for dynamic 3D scanning of a spatial object according to the invention,

Fig. 5 presents an example of a captured frame of a spatial object with a stripe pattern on its surface,

Fig. 6 presents an example of a map of the probability of qualifying pixels for a reconstruction of a 3D image of a spatial object,

Fig. 7 presents an example of a shadow mask comprising pixels excluded from a reconstruction of a 3D image of a spatial object,

Fig. 8 presents an example of a frame comprising the spatial object with the stripe pattern onto its surface with blanked out pixels excluded from a reconstruction of a 3D image of a spatial object,

Fig. 9A presents an example of a map of the imaginary component of a signal with a variable frequency,

Fig. 9B presents an example of a map of the real component of a signal with a variable frequency,

Fig. 10 presents an example of a wrapped phase map with a variable frequency,

Fig. 11A presents an example of a pixel map with data comprising assigned period numbers,

Fig. 11B presents an example of a map of probability values of assigning period numbers,

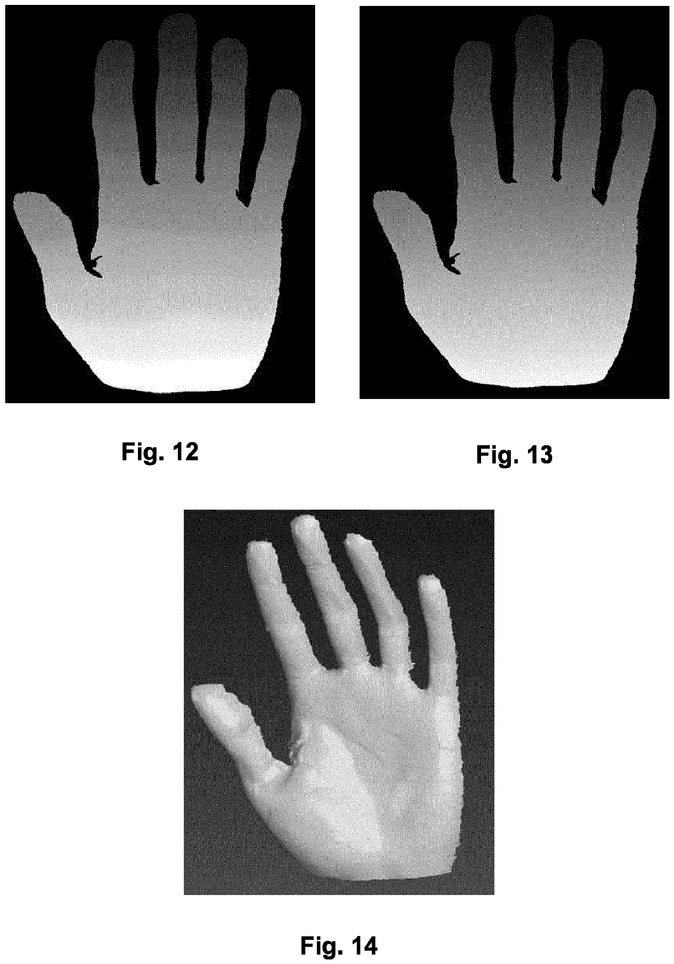

Fig. 12        presents an example of an unwrapped phase map with a variable frequency,

Fig. 13        presents an example of an unwrapped phase map with a constant frequency,

Fig. 14        presents an example of a reconstructed 3D image of a spatial object,

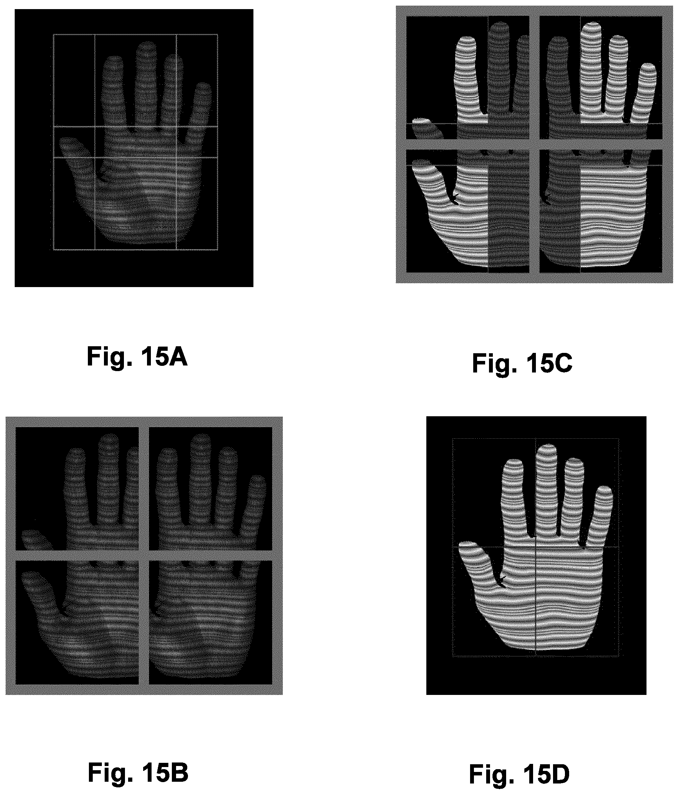

Fig. 15A       presents an example of a captured frame with indicated overlapping edges,

Fig. 15B       presents an example of a captured frame divided into square fragments,

Fig. 15C       presents an example of square fragments of a map of the imaginary component of a signal with a variable frequency with cut out overlapping edges,

Fig. 15D       presents an example of an assembled map of the imaginary component of a signal with a variable frequency,

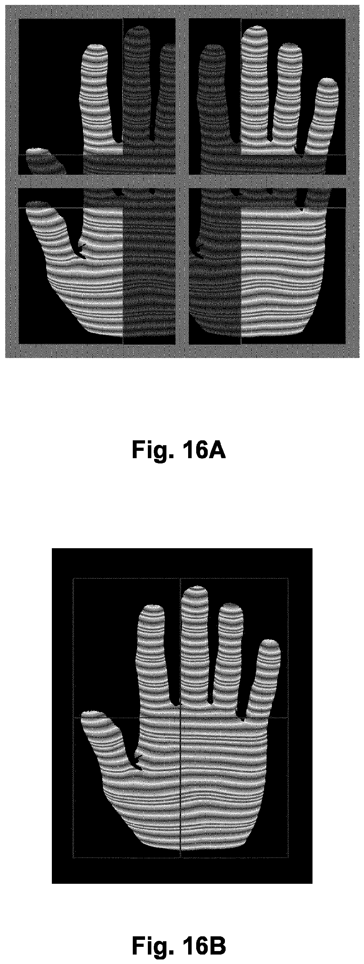

Fig. 16A       presents an example of square fragments of a map of the real component of a signal with a variable frequency with cut out overlapping edges,

Fig. 16B       presents an example of an assembled a map of the real component of a signal with a variable frequency,

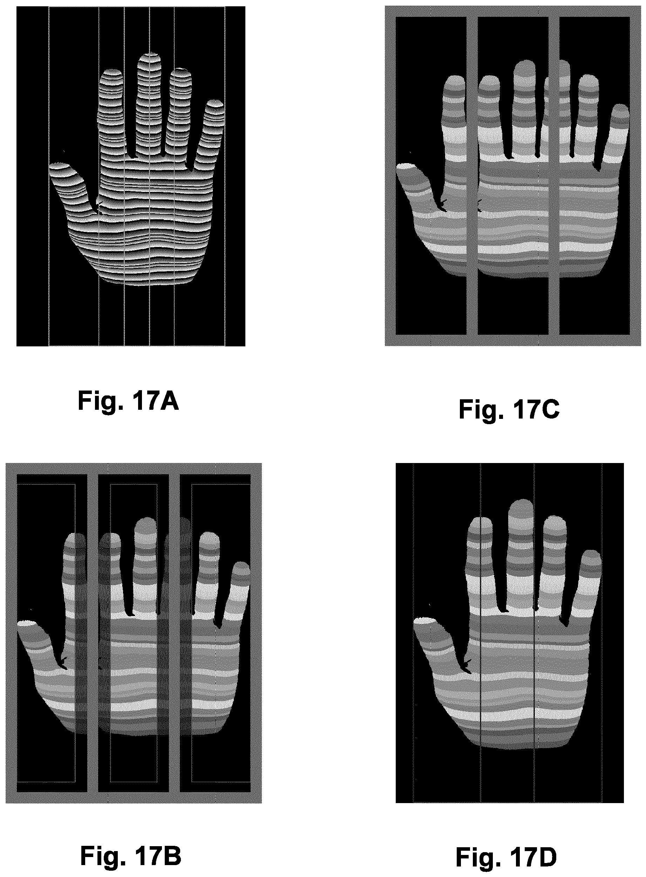

Fig. 17A       presents an example of a spatial object in a wrapped phase map with indicated overlapping edges,

Fig. 17B       presents an example of a spatial object in a wrapped phase map divided into longitudinal fragments,

Fig. 17C       presents an example of a pixel map with data comprising assigned period numbers with cut out overlapping edges,

Fig. 17D       presents an example of an assembled a pixel map with data comprising assigned period numbers.

### Detailed description of the invention

### The first embodiment of the invention

### A method for dynamic 3D scanning of a spatial object

In a method for dynamic 3D scanning of a spatial object according to the first embodiment of the invention a stripe pattern 4 is projected 101 onto a spatial object 5, for example a hand, by a projector 2 of a dynamic 3D scanner 1 and a frame of the spatial object 5 with the stripe pattern 4 onto its surface is captured 102 by a camera 3 of the dynamic 3D scanner 1. Said step of projecting 101 is performed using structured light. In the other embodiments said step of projecting 101 can be performed using halogen lighting, infrared light lasers, red lasers, blue lasers or LEDs.

The stripe pattern 4 is a variable-frequency pattern formed with the usage of a periodic function and the stripe pattern 4 is arranged such that

- the width/height of its stripes corresponds to an oscillation period $s_i$ of eight pixels or its multiples, where a maximum value of the oscillation period $s_i$ is limited to a maximum value of the resolution of the projector 2, wherein $i = (0,1, ..., n)$;

- the stripes form a sequence S of said oscillation periods $s_i$, wherein at most three of consecutive oscillation periods $s_i$ may have the same value, wherein $i = (0,1, ..., n)$;

- the sum of the oscillation periods $s_i$ forming the sequence S must be equal to or greater than the maximum value of the resolution of the projector 2.

The stripe pattern 4 is generated 122 with enhancement of overall stripe pattern brightness by increasing a periodic function constant component $I_{DC}$ of a stripe patten pixel brightness level $I(x)$ while decreasing a periodic function variable component $I_{AC}$ of said level, wherein

$$I(x) = I_{DC} + I_{AC} * pw(\varphi(x))$$

where:

$I(x)$ - a stripe pattern pixel brightness level for a pixel coordinate value x in a 8-bit scale (0, 255),

$I_{DC}$ - a periodic function constant component,

$I_{AC}$ - a periodic function variable component,

$x$ - a pixel coordinate value of the stripe pattern (4),

$\varphi(x)$ - a function transforming a pixel coordinate value x of the stripe pattern (4) to an angular value $\varphi$ in a range $\langle 0, 2\pi \rangle$,

$pw(\varphi(x))$ - a periodic function used to form the stripe patten (4).

The generation of the stripe pattern 4 with enhancement of overall stripe pattern brightness by increasing the periodic function constant component $I_{DC}$ of the stripe patten pixel brightness level $I(x)$ while decreasing the periodic function variable component $I_{AC}$ of said level results in increased illumination of the captured frame what allows to include in said captured frame more information about a degree of shading and texture of the spatial object 5. As a consequence increasing the periodic function constant component $I_{DC}$ of the stripe pattern pixel brightness level $I(x)$ while decreasing the periodic function variable component $I_{AC}$ of said level facilitates distinguishing areas from a further generated pixel map that are subject to reconstruction and those excluded from said reconstruction.

The periodic function is based on the arcsine function.

$$pw(\varphi(x)) = \frac{2}{\pi} \sin^{-1}\left(z(\varphi(x))\right)$$

where:
$z(\varphi(x))$ - a linear zigzag function defined in a range $\langle 0, 2\pi \rangle$,

$$z(\varphi(x)) = \left| 2 - \left| 1 - \frac{2 \cdot (\varphi(x))}{\pi} \right| \right| - 1$$

where:
$|.|$ - an absolute value operator,

$$\varphi(x) = \sum_{i=0}^{N-1} \hat{\varphi}(x, i)$$

$$\hat{\varphi}(x, i) = \begin{cases} \dfrac{(x - \hat{s}_i) \cdot 2\pi}{s_i} & for\ \hat{s}_i \leq x < \hat{s}_{i+1} \\ 0 & otherwise \end{cases}$$

$$\hat{S} = \{\hat{s}_i\}$$

$$\hat{s}_i = \sum_{k=0}^{i-1} s_k$$

where:

$\hat{s}_i$ - an element of an auxiliary sequence $\hat{S}$ of accumulated oscillation periods, wherein the auxiliary sequence $\hat{S}$ determines ranges of pixel coordinate values of the stripe pattern 4 for each oscillation period $s_i$ in the sequence S such that $s_i$ is an oscillation period value in a pixel range $(\hat{s}_i, \hat{s}_{i+1})$, wherein $i = (0,1, ..., n)$;

$\hat{\varphi}(x,i)$ - a conditional function that allows to transform a pixel coordinate value $x$ of the stripe pattern (4) to an angular value $\varphi$ in a range $\langle 0,2\pi )$ for an oscillation period $s_i$ if the pixel coordinate value $x$ of the stripe pattern 4 fits in a determined range of pixel coordinate values of the oscillation period $s_i$, wherein $i = (0,1, ... , n)$.

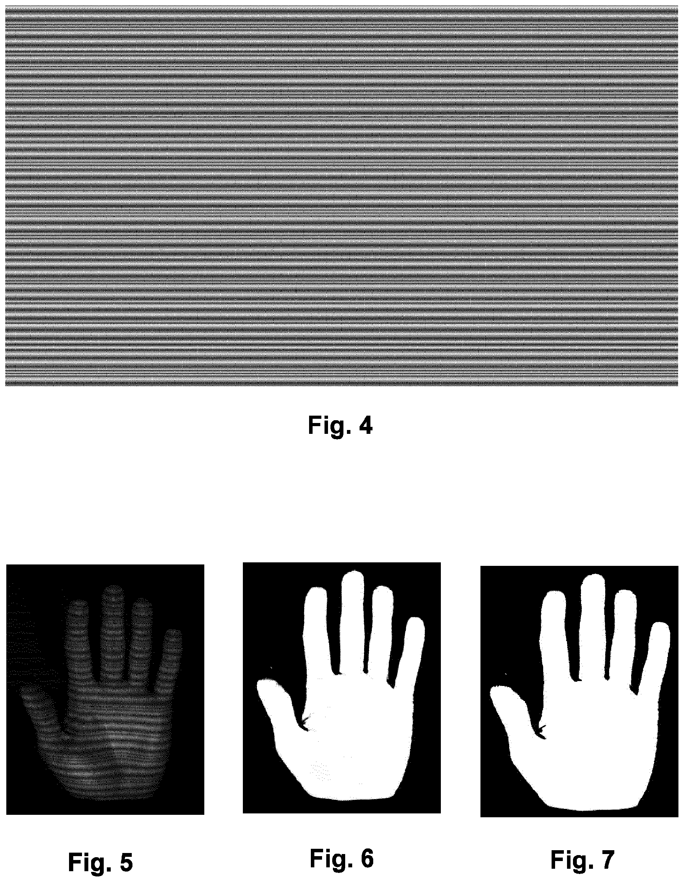

An exemplary stripe pattern (Fig. 4) formed with the usage of the periodic function based on the arcsine function is arranged such that

- the width/height of its stripes corresponds to an oscillation period $s_i$ of eight, sixteen and twenty four pixels, wherein $i = (0,1, ..., n)$;
- the stripes form a sequence S of said oscillation periods $s_i$, wherein $i = (0,1, ..., n)$ and where

$$S = \{s_i\}, i \in \langle 0, 63 \rangle$$

S = {24, 24, 8, 8, 8, 24, 24, 16, 8, 24, 8, 8, 24, 24, 16, 8, 8, 24, 24, 8, 8, 24, 24, 16, 24, 24, 8, 8, 16, 24, 24, 8, 24, 24, 8, 8, 8, 24, 24, 8, 8, 24, 24, 16, 24, 24, 8, 8, 24, 24, 8, 24, 24, 8, 24, 24, 16, 16, 24, 24, 8, 8, 8, 24},
- the sum of the oscillation periods $s_i$ forming the sequence S is equal to the maximum value of the resolution of the projector 2, thus 1920 x 1080, wherein $i = (0,1, ..., n)$.

Furthermore,

$$\hat{S} = \{\hat{s}_i\}, i \in \langle 0, 64 \rangle$$

$$\hat{s}_i = \sum_{k=0}^{i-1} s_k$$

$\hat{S}$ = {0, 24, 48, 56, 64, 72, 96, 120, 136, 144, 168, 176, 184, 208, 232, 248, 256, 264, 288, 312, 320, 328, 352, 376, 392, 416, 440, 448, 456, 472, 496, 520, 528, 552, 576, 584, 592, 600, 624, 648, 656, 664, 688, 712, 728, 752, 776, 784, 792, 816, 840, 848, 872, 896, 904, 928, 952, 968, 984, 1008, 1032, 1040, 1048, 1056, 1080}.

Thus, for example the first period $s_0$ of the sequence S of said oscillation periods applies for the first 24 pixels, that is, from the pixel number 0 to the pixel number 23 inclusive.

The application of the disclosed stripe pattern 4 allows to eliminate the need to use a coding frame during dynamic 3D scanning of a spatial object. This is due to the fact that the disclosed stripe pattern 4 allows to comprise all the information needed to a reconstruction of the scanned spatial object 5 in a single frame. As a result a 3D image reconstruction is more resistant to errors when the scanned object 5 moves quickly. Furthermore, the application of the disclosed stripe pattern 4 eliminates the problem of delays occurring in acquisition of image sequences due to the way the camera 3 and the projector 2, synchronized in the dynamic 3D scanner 1, work together.

Furthermore, the application of the stripe pattern 4 which is a variable-frequency pattern formed with the usage of the periodic function based on the arcsine function allows to reconstruct a 3D image of a spatial object 5 with a higher level of accuracy compared to solutions known from the state of the art.

In the next step a map of the probability of qualifying pixels for a reconstruction of a 3D image of the spatial object 5 is generated 103 from the captured frame. Said generation is based on binary classification, wherein pixels excluded from the reconstruction are assigned to a negative class and pixels to be reconstructed are assigned to a positive class. Said binary classification is known from the prior art. Said generation is done by a first convolutional neural network. Input data of the first convolutional neural network constitutes the captured frame of the spatial object 5 with the stripe pattern 4 on its surface. Output data of the first convolutional neural network constitutes the map of the probability of qualifying pixels for a reconstruction of a 3D image of the spatial object 5.

After said step the map of the probability of qualifying pixels for a reconstruction of a 3D image of the spatial object 5 is thresholded 104 to obtain 105 a shadow mask comprising pixels excluded from the reconstruction of a 3D image of the spatial object 5. For example a brightness threshold is 50%.

In the following step the captured frame is correlated 106 with the shadow mask to obtain 107 a frame comprising the spatial object 5 with the stripe pattern 4 onto its surface with blanked out pixels excluded from the reconstruction of a 3D image of the spatial object 5.

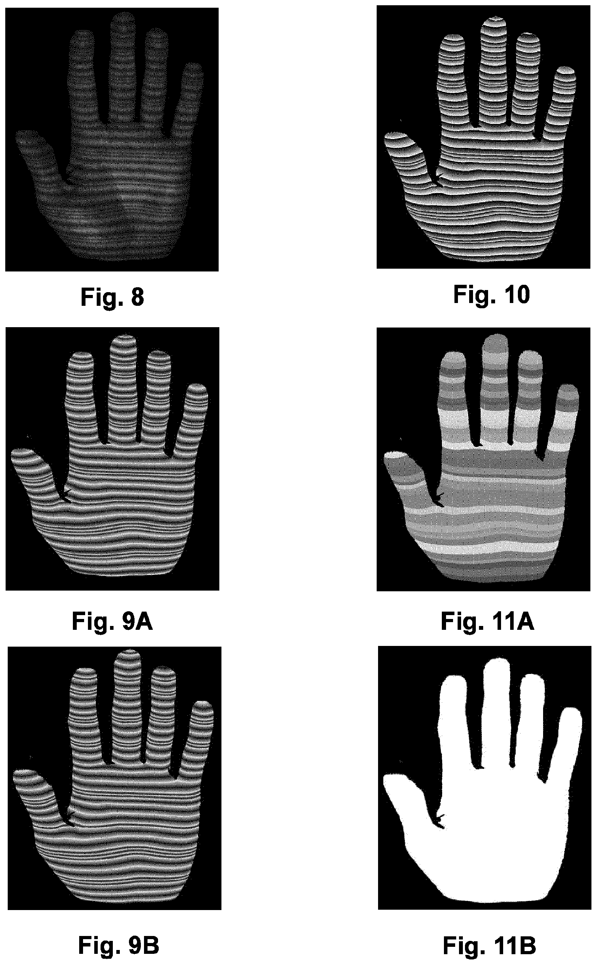

Further, a map of the imaginary component of a signal with a variable frequency (Fig. 9A) and a map of the real component of a signal with a variable frequency (Fig. 9B) are generated 109 from the frame comprising the spatial object 5 with the stripe pattern 4 onto its surface with blanked out pixels excluded from said reconstruction. Said generation is done by a second convolutional neural network. Input data of the second convolutional neural network constitutes the frame comprising the spatial object 5 with the stripe pattern 4 onto its surface with blanked out pixels excluded from the reconstruction of a 3D image of the spatial object 5. Output data of the second convolutional neural network constitute the map of the imaginary component of a signal with a variable frequency and a map of the real component of a signal with a variable frequency.

Next, a wrapped phase map with a variable frequency is generated 110 from the map of the imaginary component of a signal with a variable frequency and a map of the real component of a signal with a variable frequency.

Since in the disclosed embodiment the stripe pattern 4 is formed with the usage of a periodic function based on the arcsine function, the map of the imaginary component of a signal with a variable frequency is a map of a signal with a variable frequency associated with the arcsine function and the map of the real component of a signal with a variable frequency is a map of a signal with a variable frequency associated with the arccosine function.

As a result, for the purposes of this embodiment, the wrapped phase map with a variable frequency is generated 110 from the map of a signal with a variable frequency associated with the arcsine function and the map of a signal with a variable frequency associated with the arccosine function. The generation 110 of the wrapped phase map with a variable frequency is done according to formula

$$\varphi_{var} = atanw2(V_{sinw}, V_{cosw})$$

where:

$$\varphi_{var} \epsilon (-\pi, \pi)$$

$$atanw2(y, x) = atans2(y', x') = atans2\left(\frac{\pi}{2} \cdot \sin(y), \frac{\pi}{2} \cdot \sin(x)\right)$$

$$y' = \frac{\pi}{2} \cdot \sin(y)$$

$$x' = \frac{\pi}{2} \cdot \sin(x)$$

and

$$atans2(y, x) = \begin{cases} \dfrac{\pi}{2} \cdot y & dla\ x \geq 0 \\ \dfrac{\pi}{2} \cdot (2 - y) & dla\ x < 0 \wedge y \geq 0 \\ \dfrac{\pi}{2} \cdot (-2 - y) & dla\ x < 0 \wedge y < 0 \end{cases}$$

where:

$\varphi_{var}$ - a relative phase value of each pixel forming the wrapped phase map with a variable frequency,
$V_{sinw}$ - a value of the map of a signal with a variable frequency associated with the arcsine function,
$V_{cosw}$ - a value of the map of a signal with a variable frequency associated with the arccosine function,
$atanw2(x,y)$ - a function that allows to determine relative phase values forming the wrapped phase map with a variable frequency based on values of the map of a signal with a variable frequency associated with the arcsine function and the map of a signal with a variable frequency associated with the arccosine function,

*atans*2(*y',x'*) - an intermediate function that allows to restore relative phase values in range $\langle-\pi, \pi\rangle$ from zigzac function components determined by converting signal values of periodic functions based on the arcsine function (*y*) and arccosine function (*x*) to *y'* and *x'* accordingly.

After the step of generation 110 of the wrapped phase map with a variable frequency a pixel map with data comprising assigned oscillation period numbers and a map of probability values of assigning oscillation period numbers is generated 116 from the wrapped phase map with a variable frequency. The generation 116 of the pixel map with data comprising assigned period numbers and the map of probability values of assigning period numbers is done by a third convolutional neural network. Input data of the third convolutional neural network constitutes the wrapped phase map with a variable frequency. Output data of the third convolutional neural network constitute the pixel map with data comprising assigned period numbers and the map of probability values of assigning period numbers.

In the next step areas having on the map of probability values of assigning the oscillation period numbers a value $\leq 0.99$ are filtered out 117 from the pixel map with data comprising assigned oscillation period number. Preferably, said value is <= 0.95 and more preferably said value is <= 0.90. The most preferably, said value is equal or greater than 0.5 and less than 1.0.

The filtered out areas from the pixel map are reconstructed 118 and an unwrapped phase map with a variable frequency is generated 119 from the wrapped phase map with a variable frequency and the pixel map with reconstructed 118 filtered out areas.

Then the unwrapped phase map with a variable frequency is transformed 120 into an unwrapped phase map with a constant frequency so as to obtain a uniform oscillation period over the entire frequency domain of the unwrapped phase map.

The transformation 120 of the unwrapped phase map with a variable frequency into the unwrapped phase map with a constant frequency is done with the usage of the formula:

$$\phi_{const} = w(\phi_{var}) \cdot f(i) + \big(i + m(i)\big) \cdot 2\pi$$

where:

$$i = \left\lfloor \frac{\phi_{var}}{2\pi} \right\rfloor$$

$$w(\phi_{var}) = \phi_{var} - 2\pi \cdot i$$

and

$$f(i) = \frac{s_i}{8}$$

$$m(i) = \sum_{k=0}^{i-1}(f(k) - 1)$$

where

$\Phi_{var}$ - an absolute phase value associated with the unwrapped phase map with a variable frequency,

$\Phi_{const}$ - an absolute phase value associated with the unwrapped phase map with a constant frequency,

$w(\Phi_{var})$ - an auxiliary function that allows to extract from the absolute phase value associated with the unwrapped phase map with a variable frequency the relative phase value in a range $\langle 0,2\pi\rangle$,

*i* - a number of an oscillation period $s_i$, wherein the number corresponds to an absolute phase value associated with the unwrapped phase map with a variable frequency $\Phi_{var}$,

$s_i$ - a value of an oscillation period of the sequence S formed by the strips of the stripe pattern 4, wherein $i = (0, 1, ..., n)$;

$f(i)$ - a relative phase value multiplier for period number $i$,

$m(i)$ - an oscillation period number modifier for period number $i$,

$f(k)$ - a relative phase value multiplier for period number $k$.

**Table 1** presents an exemplary set of values of oscillation period $s_i$, multipliers $f(i)$ and modifiers $m(i)$ used in the first embodiment of the invention.

| Number of oscillation period $i$ | Value of oscillation period $s_i$ | Value of multiplier $f(i)$ | Value of modifier $m(i)$ | Number of oscillation period $i$ | Value of oscillation period $s_i$ | Value of multiplier $f(i)$ | Value of modifier $m(i)$ |
|---|---|---|---|---|---|---|---|
| 0 | 24 | 3 | 0 | 32 | 24 | 3 | 34 |
| 1 | 24 | 3 | 2 | 33 | 24 | 3 | 36 |
| 2 | 8 | 1 | 4 | 34 | 8 | 1 | 38 |
| 3 | 8 | 1 | 4 | 35 | 8 | 1 | 38 |
| 4 | 8 | 1 | 4 | 36 | 8 | 1 | 38 |
| 5 | 24 | 3 | 4 | 37 | 24 | 3 | 38 |
| 6 | 24 | 3 | 6 | 38 | 24 | 3 | 40 |
| 7 | 16 | 2 | 8 | 39 | 8 | 1 | 42 |
| 8 | 8 | 1 | 9 | 40 | 8 | 1 | 42 |
| 9 | 24 | 3 | 9 | 41 | 24 | 3 | 42 |
| 10 | 8 | 1 | 11 | 42 | 24 | 3 | 44 |
| 11 | 8 | 1 | 11 | 43 | 16 | 2 | 46 |
| 12 | 24 | 3 | 11 | 44 | 24 | 3 | 47 |
| 13 | 24 | 3 | 13 | 45 | 24 | 3 | 49 |
| 14 | 16 | 2 | 15 | 46 | 8 | 1 | 51 |
| 15 | 8 | 1 | 16 | 47 | 8 | 1 | 51 |
| 16 | 8 | 1 | 16 | 48 | 24 | 3 | 51 |
| 17 | 24 | 3 | 16 | 49 | 24 | 3 | 53 |
| 18 | 24 | 3 | 18 | 50 | 8 | 1 | 55 |
| 19 | 8 | 1 | 20 | 51 | 24 | 3 | 55 |
| 20 | 8 | 1 | 20 | 52 | 24 | 3 | 57 |
| 21 | 24 | 3 | 20 | 53 | 8 | 1 | 59 |
| 22 | 24 | 3 | 22 | 54 | 24 | 3 | 59 |
| 23 | 16 | 2 | 24 | 55 | 24 | 3 | 61 |
| 24 | 24 | 3 | 25 | 56 | 16 | 2 | 63 |
| 25 | 24 | 3 | 27 | 57 | 16 | 2 | 64 |
| 26 | 8 | 1 | 29 | 58 | 24 | 3 | 65 |
| 27 | 8 | 1 | 29 | 59 | 24 | 3 | 67 |
| 28 | 16 | 2 | 29 | 60 | 8 | 1 | 69 |
| 29 | 24 | 3 | 30 | 61 | 8 | 1 | 69 |

(continued)

| Number of oscillation period $i$ | Value of oscillation period $s_i$ | Value of multiplier $f(i)$ | Value of modifier $m(i)$ | | Number of oscillation period $i$ | Value of oscillation period $s_i$ | Value of multiplier $f(i)$ | Value of modifier $m(i)$ |
|---|---|---|---|---|---|---|---|---|
| 30 | 24 | 3 | 32 | | 62 | 8 | 1 | 69 |
| 31 | 8 | 1 | 34 | | 63 | 24 | 3 | 69 |

Finally, a 3D image of the spatial object 5 is reconstructed 120 based on the unwrapped phase map with a constant frequency. During said reconstruction 120 of the 3D image of the spatial object 5 a projector coordinate value $x$ ($\Phi_{const}$) of each reconstructed pixel of the frame captured 102 by the camera 3 is determined 121A from the unwrapped phase map with a constant frequency according to formula

$$x(\phi_{const}) = \frac{p\phi_{const}}{2\pi}$$

where:

$$\phi \epsilon (0, \infty)$$

$\Phi_{const}$ - an absolute phase value associated with the unwrapped phase map with a constant frequency,
$p$ - an oscillation period of the unwrapped phase map with a constant frequency expressed in pixels,

in order to obtain 121B a map of pixel coordinates. The 3D coordinates of the spatial object 5 are determined 121C by converting the unwrapped phase map with a constant frequency into the map of projector pixel coordinates and taking into consideration relative location of the camera 3 and the projector 2.

## A dynamic 3D scanner

A dynamic 3D scanner 1 according to the first embodiment comprises a projector 2 for projecting 101 a stripe pattern 4 onto a spatial object 5. The projector 2 can be a home projector with a HDMI interface with a full HD resolution. The projector 2 uses structured light to project 101 the stripe pattern 4. In the other embodiments the projector 2 can project 101 said pattern 4 using halogen lighting, infrared light lasers, red lasers, blue lasers or LEDs. Further, the dynamic 3D scanner 1 comprises a camera 3 for capturing 102 a frame of the spatial object 5 with the stipe pattern 4 on its surface. The camera 3 is equipped with lens 6 and a spectral filter 7, wherein said filter 7 is designed to allow light of a specific wavelength to be captured. Said camera 3 is pointed at a non-zero angle to a display direction of the projector 2. The projector 2 and the camera 3 are fixed to a support structure 8, wherein said support structure 8 allows adjustment of mutual position of the projector 2 and camera 3 and as a consequence ensures that the proper angles between them are maintained. Further, the projector 2 is connected with a stand 9. Further, the dynamic 3D scanner 1 comprises a processing unit and said processing unit is configured to perform the steps of the method according to the invention. The processing unit is an integral component of the dynamic 3D scanner. The dynamic 3D scanner 1 is designed to be powered by an external power supply. In the other embodiments the processing unit can constitute an external device, for example a desktop computer. In such cases the dynamic 3D scanner 1 is designed to be connected to an external processing unit.
The dynamic 3D scanner disclosed in the indicated embodiment provides a disclosure that is also inherent in the other embodiments.

## A computer program

A computer program comprising means of the program code for performing all steps of the method according to the invention, when said program is running on the dynamic 3D scanner according to the invention.
The computer program disclosed in the indicated embodiment provides a disclosure that is also inherent in the other embodiments.

## A computer-readable medium

A computer-readable medium storing computer-implemented instructions for performing all the steps of the method according to the invention implemented on the dynamic 3D scanner according to the invention.

The computer-readable medium disclosed in the indicated embodiment provides a disclosure that is also inherent in the other embodiments.

### The second embodiment of the invention

### A method for dynamic 3D scanning of a spatial object

The second embodiment of the method for dynamic 3D scanning of a spatial object as in the first embodiment, with the difference that after the step of obtaining 107 the frame comprising the spatial object 5 with the stripe pattern 4 onto its surface with blanked out pixels excluded from the reconstruction of a 3D image of the spatial object 5 and before the step of generating 109 the map of the imaginary component of a signal with a variable frequency and the map of the real component of a signal with a variable frequency from the frame comprising the spatial object 5 with the stripe pattern 4 onto its surface with blanked out pixels excluded from said reconstruction, said frame is divided 108 into square fragments, for example having a resolution of 256 pixels x 256 pixels, and the generation 109 of the map of the imaginary component of a signal with a variable frequency and the map of the real component of a signal with a variable frequency is performed generating 109A for each of said square fragments of said frame square fragments of a map of the imaginary component of a signal with a variable frequency and square fragments of a map of the real component of a signal with a variable frequency, cutting out 109B overlapping edges of the square fragments of the map of the imaginary component of a signal with a variable frequency and the square fragments of the map of the real component of a signal with a variable frequency, assembling 109C of the square fragments of the map of the imaginary component of a signal with a variable frequency and the square fragments of the map of the real component of a signal with a variable frequency into, respectively, the map of the imaginary component of a signal with a variable frequency and the map of the real component of a signal with a variable frequency. Since this embodiment like the first embodiment uses a periodic function based on the arcsine function, the map of the imaginary component of a signal with a variable frequency is a map of a signal with a variable frequency associated with the arcsine function and the map of the real component of a signal with a variable frequency is a map of a signal with a variable frequency associated with the arccosine function.

The application of the steps of division 108 of the frame comprising the spatial object 5 with the stripe pattern 4 onto its surface with blanked out pixels excluded from the reconstruction of a 3D image of the spatial object into square fragments, the generation 109 of the map of the imaginary component of a signal with a variable frequency and the map of the real component of a signal with a variable frequency performed by generating 109A for each of said square fragments of said frame square fragments of a map of the imaginary component of a signal with a variable frequency and square fragments of a map of the real component of a signal with a variable frequency, cutting out 109B overlapping edges of the square fragments of the map of the imaginary component of a signal with a variable frequency and the square fragments of the map of the real component of a signal with a variable frequency, assembling 109C of the square fragments of the map of the imaginary component of a signal with a variable frequency and the square fragments of the map of the real component of a signal with a variable frequency into, respectively, the map of the imaginary component of a signal with a variable frequency and the map of the real component of a signal with a variable frequency allows to obtain a higher maximum resulting resolution with the usage of the same computing memory resource as in the solutions known from the prior art.

Furthermore, after the step of generating 110 the wrapped phase map with a variable frequency from the map of the imaginary component of a signal with a variable frequency and the map of the real component of a signal with a variable frequency, and before the step of generating 116 the pixel map with data comprising assigned period numbers and the map of probability values of assigning period numbers from the wrapped phase map with a variable frequency the spatial object in the wrapped phase map is divided 111 into longitudinal fragments, for example having a longitudinal resolution of 128 pixels. Next, overlapping edges of the longitudinal fragments of the pixel map with data comprising assigned period numbers are cut out 112, overlapping edges of the longitudinal fragments of the map of probability values of assigning period numbers are cut out 113, the longitudinal fragments of the pixel map with data comprising assigned period numbers with the cut out overlapping edges are assembled 114 into the pixel map with data comprising assigned period numbers, and the longitudinal fragments of the map of probability values of assigning period numbers with the cut out overlapping edges are assembled 115 into the map of probability values of assigning period numbers.

The application of the steps of division 111 of the wrapped phase map into longitudinal fragments, cutting out 112 overlapping edges of the longitudinal fragments of the pixel map with data comprising assigned period numbers, cutting out 113 overlapping edges of the longitudinal fragments of the map of probability values of assigning period numbers, and assembling 114 the pixel map with data comprising assigned period numbers from the longitudinal fragments of the pixel map with data comprising assigned period numbers with the cut out overlapping edges as well as assembling 115 the map of probability values of assigning period numbers from the longitudinal fragments of the map of probability values of assigning period numbers with the cut out overlapping edges allows to obtain even higher maximum resulting resolution, even up to 10 times, with the usage of the same computing memory resource as in the solutions known from the prior art.

**Claims**

1. A method for dynamic 3D scanning of a spatial object comprising the following steps:

   - projecting (101) a stripe pattern (4) onto a spatial object (5) by a projector (2) of a dynamic 3D scanner (1), wherein
   the stripe pattern (4) is a variable-frequency pattern formed with the usage of a periodic function, and the stripe pattern (4) is arranged such that

     - the width/height of its stripes corresponds to an oscillation period $s_i$ of eight pixels or its multiples, where a maximum value of the oscillation period $s_i$ is limited to a maximum value of the resolution of the projector (2), wherein $i = (0,1, ..., n)$;
     - the stripes form a sequence S of said oscillation periods $s_i$, wherein at most three of consecutive oscillation periods $s_i$ may have the same value, wherein $i = (0,1, ..., n)$;
     - the sum of the oscillation periods $s_i$ forming the sequence S must be equal to or greater than the maximum value of the resolution of the projector (2), wherein $i = (0,1, ..., n)$;

   - capturing (102) by a camera (3) of the dynamic 3D scanner (1) a frame of the spatial object (5) with the stripe pattern (4) onto its surface,
   - generating (103) a map of the probability of qualifying pixels for a reconstruction of a 3D image of the spatial object (5) from the captured frame,
   - thresholding (104) the map of the probability of qualifying pixels for a reconstruction of a 3D image of the spatial object (5) to obtain (105) a shadow mask comprising pixels excluded from the reconstruction of a 3D image of the spatial object (5),
   - correlating (106) the captured frame with the shadow mask to obtain (107) a frame comprising the spatial object (5) with the stripe pattern (4) onto its surface with blanked out pixels excluded from the reconstruction of a 3D image of the spatial object (5),
   - generating (109) a map of the imaginary component of a signal with a variable frequency and a map of the real component of a signal with a variable frequency from the frame comprising the spatial object (5) with the stripe pattern (4) onto its surface with blanked out pixels excluded from said reconstruction,
   - generating (110) a wrapped phase map with a variable frequency from the map of the imaginary component of a signal with a variable frequency and the map of the real component of a signal with a variable frequency,
   - generating (116) a pixel map with data comprising assigned oscillation period numbers and a map of probability values of assigning oscillation period numbers from the wrapped phase map with a variable frequency,
   - filtering out (117) from the pixel map with data comprising assigned oscillation period number areas having on the map of probability values of assigning the oscillation period numbers a value $\leq 0.99$,
   - reconstructing (118) the filtered out areas from the pixel map,
   - generating (119) an unwrapped phase map with a variable frequency from the wrapped phase map with a variable frequency and the pixel map with reconstructed (118) filtered out areas,
   - transforming (120) the unwrapped phase map with a variable frequency into an unwrapped phase map with a constant frequency so as to obtain a uniform oscillation period over the entire frequency domain of the unwrapped phase map,
   - reconstructing (121) a 3D image of the spatial object based on the unwrapped phase map with a constant frequency.

2. The method according to claim 1, wherein the stripe pattern (4) is generated (122) with enhancement of overall stripe pattern brightness by increasing a periodic function constant component $I_{DC}$ of a stripe patten pixel brightness level $I(x)$ while decreasing a periodic function variable component $I_{AC}$ of said level, wherein

$$I(x) = I_{DC} + I_{AC} * pw\big(\varphi(x)\big)$$

   where:

   $I(x)$ - a stripe pattern pixel brightness level for a pixel coordinate value $x$ in a 8-bit scale (0,255),
   $I_{DC}$ - a periodic function constant component,
   $I_{AC}$ - a periodic function variable component,
   $x$ - a pixel coordinate value of the stripe pattern (4),

$\varphi(x)$ - a function transforming a pixel coordinate value $x$ of the stripe pattern (4) to an angular value $\varphi$ in a range $\langle 0, 2\pi \rangle$,

$pw(\varphi(x))$ - a periodic function used to form the stripe patten (4).

3. The method according to any of the preceding claims, wherein the transformation (120) of the unwrapped phase map with a variable frequency into the unwrapped phase map with a constant frequency is done with the usage of the formula:

$$\Phi_{const} = w(\Phi_{var}) \cdot f(i) + \big(i + m(i)\big) \cdot 2\pi$$

where:

$$i = \left\lfloor \frac{\Phi_{var}}{2\pi} \right\rfloor$$

$$w(\Phi_{var}) = \Phi_{var} - 2\pi \cdot i$$

and

$$f(i) = \frac{s_i}{8}$$

$$m(i) = \sum_{k=0}^{i-1} (f(k) - 1)$$

where:

$\Phi_{var}$ - an absolute phase value associated with the unwrapped phase map with a variable frequency,

$\Phi_{const}$ - an absolute phase value associated with the unwrapped phase map with a constant frequency,

$w(\Phi_{var})$ - an auxiliary function that allows to extract from the absolute phase value associated with the unwrapped phase map with a variable frequency the relative phase value in a range $\langle 0, 2\pi \rangle$,

$i$ - a number of an oscillation period $s_i$, wherein the number corresponds to an absolute phase value associated with the unwrapped phase map with a variable frequency $\Phi_{var}$,

$s_i$ - a value of an oscillation period of the sequence S formed by the stripes of the stripe pattern (4), wherein $i = (0, 1, ..., n)$;

$f(i)$ - a relative phase value multiplier for period number $i$,

$m(i)$ - an oscillation period number modifier for period number $i$,

$f(k)$ - a relative phase value multiplier for period number $k$.

4. The method according to any of the preceding claims, wherein when reconstructing (121) of the 3D image of the spatial object (5) a projector coordinate value $x(\Phi_{const})$ of each reconstructed pixel of the frame captured (102) by the camera (3) is determined (121A) from the unwrapped phase map with a constant frequency according to formula

$$x(\Phi_{const}) = \frac{p\Phi_{const}}{2\pi}$$

where:

$$\Phi_{const} \in \langle 0, \infty )$$

$\Phi_{const}$ - an absolute phase value associated with the unwrapped phase map with a constant frequency,

*p* - an oscillation period of the unwrapped phase map with a constant frequency expressed in pixels,
in order to obtain (121B) a map of projector pixel coordinates,
wherein the 3D coordinates of the spatial object (5) are determined (121C) by converting the unwrapped phase map with a constant frequency into the map of projector pixel coordinates and taking into consideration relative location of the camera (3) and the projector (2).

5. The method according to any of the preceding claims, wherein after the step of obtaining (107) the frame comprising the spatial object (5) with the stripe pattern (4) onto its surface with blanked out pixels excluded from the reconstruction of a 3D image of the spatial object (5)and before the step of generating (109) the map of the imaginary component of a signal with a variable frequency and the map of the real component of a signal with a variable frequency from the frame comprising the spatial object (5) with the stripe pattern (4) onto its surface with blanked out pixels excluded from said reconstruction, said frame is divided (108) into square fragments, and the generation (109) of the map of the imaginary component of a signal with a variable frequency and the map of the real component of a signal with a variable frequency is performed by

- generating (109A) for each of said square fragments of said frame square fragments of a map of the imaginary component of a signal with a variable frequency and square fragments of a map of the real component of a signal with a variable frequency,
- cutting out (109B) overlapping edges of the square fragments of the map of the imaginary component of a signal with a variable frequency and the square fragments of the map of the real component of a signal with a variable frequency,
- assembling (109C) of the square fragments of the map of the imaginary component of a signal with a variable frequency and the square fragments of the map of the real component of a signal with a variable frequency into, respectively, the map of the imaginary component of a signal with a variable frequency and the map of the real component of a signal with a variable frequency.

6. The method according to any of the preceding claims, wherein after the step of generating (110) the wrapped phase map with a variable frequency from the map of the imaginary component of a signal with a variable frequency and the map of the real component of a signal with a variable frequency, and before the step of generating (116) the pixel map with data comprising assigned period numbers and the map of probability values of assigning period numbers from the wrapped phase map with a variable frequency the spatial object in the wrapped phase map is divided (111) into longitudinal fragments, and

- overlapping edges of the longitudinal fragments of the pixel map with data comprising assigned period numbers are cut out (112),
- overlapping edges of the longitudinal fragments of the map of probability values of assigning period numbers are cut out (113),
- the longitudinal fragments of the pixel map with data comprising assigned period numbers with the cut out overlapping edges are assembled (114) into the pixel map with data comprising assigned period numbers, and
- the longitudinal fragments of the map of probability values of assigning period numbers with the cut out overlapping edges are assembled (115) into the map of probability values of assigning period numbers.

7. The method according to any of the preceding claims, wherein the step of filtering out (117) from the pixel map with data comprising assigned period number areas having on the map of probability values of assigning the period numbers is performed for a value <= 0.95.

8. The method according to any of the preceding claims from 1 to 7, wherein the step of filtering out (117) from the pixel map with data comprising assigned period number areas having on the map of probability values of assigning the period numbers is performed for a value <= 0.90.

9. The method according to any of the preceding claims, wherein generation (103) of the map of the probability of qualifying pixels for a reconstruction of a 3D image of the spatial object (5) is done by a first convolutional neural network.

10. The method according to any of the preceding claims, wherein the generation (109) of the map of the imaginary component of a signal with a variable frequency and the map of the real component of a signal with a variable frequency is done by a second convolutional neural network.

11. The method according to any of the preceding claims, wherein the generation (116) of the pixel map with data comprising assigned period numbers and the map of probability values of assigning period numbers is done by a third convolutional neural network.

12. The method according to any of the preceding claims, wherein the stripe pattern (4) is a variable-frequency pattern formed with the usage of a periodic function based on the arcsine function

$$pw\big(\varphi(x)\big) = \frac{2}{\pi}\sin^{-1}\Big(z\big(\varphi(x)\big)\Big)$$

where:
$z(\varphi(x))$ - a linear zigzag function defined in a range $\langle 0,2\pi\rangle$,

$$z\big(\varphi(x)\big) = \left|2 - \left|1 - \frac{2\cdot\big(\varphi(x)\big)}{\pi}\right|\right| - 1$$

where:
$|.|$ - an absolute value operator,

$$\varphi(x) = \sum_{i=0}^{N-1} \hat{\varphi}(x,i)$$

$$\hat{\varphi}(x,i) = \begin{cases} \dfrac{(x - \hat{s}_i)\cdot 2\pi}{s_i} & for\ \hat{s}_i \le x < \hat{s}_{i+1} \\ 0 & otherwise \end{cases}$$

$$\hat{S} = \{\hat{s}_i\}$$

$$\hat{s}_i = \sum_{k=0}^{i-1} s_k$$

where:

$\hat{s}_i$ - an element of an auxiliary sequence $\hat{S}$ of accumulated oscillation periods, wherein the auxiliary sequence S determines ranges of pixel coordinate values of the stripe pattern (4) for each oscillation period $s_i$ in the sequence S such that $s_i$ is an oscillation period value in a pixel range $\langle\hat{s}_i,\hat{s}_{i+1}\rangle$, wherein i = (0,1, ..., n);
$\hat{\varphi}(x,i)$ - a conditional function that allows to transform a pixel coordinate value $x$ of the stripe pattern (4) to an angular value $\varphi$ in a range $\langle 0,2\pi\rangle$ for an oscillation period $s_i$ if the pixel coordinate value x of the stripe pattern (4) fits in a determined range of pixel coordinate values of the oscillation period $s_i$, wherein i = (0,1, ..., n).

13. A dynamic 3D scanner (1) comprising:

- a projector (2) for projecting (101) a stripe pattern (4) onto a spatial object (5),
- a camera (3) for capturing (102) a frame of the spatial object (5) with the stripe pattern (4) on its surface, wherein the camera (3) is pointed at non-zero angle to a display direction of the projector (2),
- the dynamic 3D scanner further comprising a processing unit,
**characterized in that**
- the processing unit is configured to performed the steps of the method according to any of the preceding claims 1-12.

**14.** A computer program comprising means of the program code for performing all steps of the method according to any of claims 1-12, when said program is running on the dynamic 3D scanner (1) according to claim 13.

**15.** A computer-readable medium storing computer-implemented instructions for performing all the steps of the method according to any of claims 1-12 implemented on the dynamic 3D scanner (1) according to claim 13.

**Fig. 1**

122

101 — Projecting a stripe pattern onto a spatial object by a projector of a dynamic 3D scanner

102 — Capturing by a camera of the dynamic 3D scanner a frame of the spatial object with the stripe pattern onto its surface

103 — Generating a map of the probability of qualifying pixels for reconstruction of a 3D image of the spatial object from the captured frame

104,105 — Thresholding the map of the probability of qualifying pixels for a reconstruction of a 3D image of the spatial object to obtain a shadow mask comprising pixels excluded from the reconstruction of a 3D image of the spatial object

106,107 — Correlating the captured frame with the shadow mask to obtain a frame comprising the spatial object with the stripe pattern onto its surface with blanked out pixels excluded from the reconstruction of a 3D image of the spatial object

108 — Dividing the captured frame into square fragments

109A
109B
109C

109 — Generating a map of the imaginary component of a signal with a variable frequency and a map of the real component of a signal with a variable frequency from the frame comprising the spatial object with the stripe pattern onto its surface with blanked out pixels excluded from said reconstruction

110 — Generating a wrapped phase map with a variable frequency from the map of the imaginary component of a signal with a variable frequency and the map of the real component of a signal with a variable frequency

116 — Generating a pixel map with data comprising assigned period numbers and a map of probability values of assigning period numbers

117 — Filtering out from the pixel map with data comprising assigned period number areas having on the map of probability values of assigning the period numbers a value ≤ 0.99

118 — Reconstructing the filtered out areas from the pixel map

119 — Generating an unwrapped phase map from the wrapped phase map and the pixel map with reconstructed filtered out areas

120 — Transforming the unwrapped phase map with a variable frequency into a unwrapped phase map with a constant frequency so as to obtain a uniform oscillation period over the entire frequency domain of the unwrapped phase map

121 — Reconstructing a 3D image of the spatial object based on the unwrapped phase map with a constant frequency

111  112  113  114  115

122

Generating the stripe pattern
with enhancement of
overall stripe pattern brightness
by increasing a periodic function
constant component $I_{DC}$ of
a stripe patten pixel brightness
level $I_{(x)}$ while decreasing
a periodic function variable
component $I_{AC}$ of said level

101

108

109A

Generating for each of
said square fragments of
said frame square fragments
a map of the imaginary component
of a signal with
a variable frequency and
square fragments of a map of
the real component of a signal with
a variable frequency

109B

Cutting out overlapping edges of
the square fragments of the map
of the imaginary component of
a signal with a variable frequency
and overlapping edges of
the square fragments of
the map of the real component of
a signal with a variable frequency

109C

Assembling of
the square fragments of the map
of the imaginary component of
a signal with a variable frequency
and the square fragments of
the map of the real component of
a signal with a variable frequency
into, respectively, the map of
the imaginary component of
a signal with a variable frequency
and the map of the real component
of a signal with a variable frequency

110

110

111

Dividing the spatial object
in the wrapped phase map
Into longitudinal fragments

112

Cutting out overlapping edges
of the longitudinal fragments
of the pixel map with data
comprising assigned
period numbers

113

Cutting out overlapping edges
of the longitudinal fragments of
the map of probability values
of assigning period numbers

114

Assembling
the longitudinal fragments of
the map of probability values of
assigning period numbers with
the cut out overlapping edges
into the map of
probability values of
assigning period numbers

115

Assembling
the longitudinal fragments
of the pixel map with
data comprising
assigned period numbers with
the cut out overlapping edges
into the pixel map with
data comprising
assigned period numbers

116

**Fig. 1**

24

**120**

**121**

Reconstructing a 3D image
of the spatial object
based on
the unwrapped phase map
with a constant frequency

**121A**

Determining a coordinate value
($x$) of each reconstructed pixel
from the unwrapped  phase
with a constant frequency
map according to formula

$$x(\phi_{const}) = \frac{p\phi_{const}}{2\pi}$$

where

$$\phi_{const} \in \langle 0, \infty )$$

$\phi_{const}$ - an absolute phase
value associated with
the unwrapped phase
map with a variable
frequency

$p$ - an oscillation period of
the unwrapped phase
map with a constant
frequency expressed
in pixels

**121B**

Obtaining a map of
pixel coordinates

**121C**

Determining
the 3D coordinates

# Fig. 1

**Fig. 2**

**Fig. 3**

**Fig. 4**

**Fig. 5**

**Fig. 6**

**Fig. 7**

Fig. 8

Fig. 10

Fig. 9A

Fig. 11A

Fig. 9B

Fig. 11B

**Fig. 12**

**Fig. 13**

**Fig. 14**

Fig. 15A

Fig. 15B

Fig. 15C

Fig. 15D

**Fig. 16A**

**Fig. 16B**

Fig. 17A

Fig. 17C

Fig. 17B

Fig. 17D

Europäisches
Patentamt

European
Patent Office

Office européen
des brevets

# EUROPEAN SEARCH REPORT

Application Number

**EP 23 19 3726**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI YIXUAN ET AL: "Deep-learning-enabled dual-frequency composite fringe projection profilometry for single-shot absolute 3D shape measurement", OPTO-ELECTRONIC ADVANCES, vol. 5, no. 5, 1 January 2022 (2022-01-01), pages 210021-210021, XP093020276, ISSN: 2096-4579, DOI: 10.29026/oea.2022.210021 * pages 210021-3 - pages 210021-7 * * figures 1, 2 * | 1-15 | INV. G06T7/521 |
| A | CN 114 777 677 A (UNIV NANJING SCIENCE & TECH) 22 July 2022 (2022-07-22) * the whole document * | 1-15 | |

TECHNICAL FIELDS SEARCHED (IPC)

G06T

The present search report has been drawn up for all claims

| Place of search | Date of completion of the search | Examiner |
|---|---|---|
| Munich | 7 February 2024 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 3726**

This annex lists the patent family members relating to the patent documents cited in  the above-mentioned European search report.
The members are as contained in the European Patent Office EDP file on
The European Patent Office is in no way liable for these particulars which are merely given for the purpose of information.

**07-02-2024**

| Patent document cited in search report | Publication date | Patent family member(s) | Publication date |
|---|---|---|---|
| CN 114777677 A | 22-07-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111383234 B
- WO 2020102814 A1
- WO 2020063013 A1
- CN 111523618 A